# EUROPÄISCHE PATENTSCHRIFT

(11) **EP 3 401 160 B1**
(45) Veröffentlichungstag und Bekanntmachung des Hinweises auf die Patenterteilung: **03.07.2019**
(21) Anmeldenummer: 18171629.1
(22) Anmeldetag: 09.05.2018
(51) Int. Cl.: B60P 7/08, A44B 11/12

(54) **GURTSPANNER**
BELT TENSIONER
TENDEUR DE SANGLE

(30) Priorität: 10.05.2017 DE 202017102800 U
(43) Veröffentlichungstag der Anmeldung: 14.11.2018
(73) Patentinhaber: Franz Miederhoff oHG, 59846 Sundern (DE)
(72) Erfinder: Vormweg, Franz, 57413 Rönkhausen (DE)
(74) Vertreter: Patentanwälte Dörner & Kötter PartG mbB

(56) Entgegenhaltungen:
- EP-A1- 0 360 602
- EP-A1- 2 248 435
- DE-U1- 20 210 879
- GB-A- 2 148 438

## Beschreibung

Die Erfindung betrifft einen Gurtspanner ausgebildet aus einem U-förmig ausgebildeten Basiselement mit einem Boden und zwei Seitenwangen, und einem an den Seitenwangen des Basiselements aus einer Offenstellung in eine Geschlossenstellung des Gurtspanners schwenkbar gelagerten, U-förmig ausgebildeten Spannhebel mit einer Handhabungslasche und zwei Seitenwangen sowie einer den Spannhebel in der Geschlossenstellung mit dem Basiselement verriegelbaren Verriegelungsvorrichtung.

Derartige Gurtspanner, die beispielsweise zum Festspannen einer Plane von Lastkraftwagen, Anhängern, Aufliegern für Sattelzugmaschinen, Eisenbahnwaggons o.dgl. vorgesehen sind, sind hinlänglich bekannt. Nachteilig bei den bekannten Gurtspannern ist, dass diese eine relativ aufwändige Mechanik für die Verriegelung des Spannhebels mit dem Basiselement aufweisen. Zudem ist bei vielen der bekannten Gurtspanner beispielsweise aufgrund der Verwendung von Federelementen für die Verriegelung ein erhöhter Kraftaufwand insbesondere zum Lösen der Verrieglung notwendig.

Aus der GB 2 148 438 A ist ein Gurtspanner offenbart, der zwei schwenkbar miteinander verbundene Kunststoffteile umfasst, die im geschlossenen Zustand über eine Verriegelungsvorrichtung miteinander verriegelbar sind. Die Verriegelungsvorrichtung umfasst zwei Raststücke, die jeweils eine Druckplatte und eine Rastplatte umfassen, die über zwei Stege miteinander verbunden sind, welche Stege zudem an dem unteren Teil angeformt sind. Die Rastplatte weist eine Hakenteil auf, das durch eine an dem Oberteil angeformte Öse hindurchtritt und diese hintergreift. Durch Verkippen der beiden gegenüberliegend angeordneten Raststücke können die Hakenteile der Rastplatten mit der Öse außer Eingriff gebracht werden, wodurch der Gurtspanner entriegelt ist. Dieser vorbekannte Gurtspanner ist sehr aufwendig gestaltet. Zudem besteht die Gefahr, dass die filigranen Stege der Raststücke, die zur Entriegelung eine erhebliche Krafteinwirkung erfordern, bei vermehrter Betätigung ermüden, wodurch die Zuverlässigkeit der Verriegelung beeinträchtigt ist.

Hier will die Erfindung Abhilfe schaffen. Der Erfindung liegt die Aufgabe zugrunde, einen Gurtspanner der angegebenen Gattung zu schaffen, der sich durch seinen einfachen Aufbau und seine geringe Anzahl von Einzelteilen auszeichnet, wobei die Verriegelungseinrichtung robust und zuverlässig ausgebildet ist und der Kraftaufwand insbesondere zum Lösen der Verriegelung des Spannhebels in der Geschlossenstellung gering ist.

Erfindungsgemäß wird diese Aufgabe durch einen Gurtspanner mit den Merkmalen des kennzeichnenden Teils des Patentanspruchs 1 gelöst.

Zweckmäßige Weiterbildungen der Erfindung sind in den Unteransprüchen gekennzeichnet.

Bei einem ersten Ausführungsbeispiel des erfindungsgemäßen Gurtspanners weist die Verriegelungsvorrichtung eine an dem Basiselement angeformte Rastnase auf, an der in Geschlossenstellung des Gurtspanners eine Rastkante des Spannhebels beim Schließen desselben einrastbar ist, wobei die Rastkante zum Entriegeln des Spannhebels über einen an dem Spannhebel angeformten Auslösehebel an der Rastnase ausklinkbar ist. Durch die angeformte Rastnase, die Rastkante sowie den angeformten Auslösehebel wird hier ein Gurtspanner zur Verfügung gestellt, der aus maximal zwei Teilen besteht, wobei ein Entriegeln des Spannhebels in der Geschlossenstellung sehr einfach und ohne erhöhten Kraftaufwand mittels des Auslösehebels erfolgt.

Die Rastnase kann je nach Ausführungsform entweder an einer der beiden Seitenwangen des Basiselements angeordnet und die Rastkante in einer benachbart zu der Seitenwange des Basiselements parallel verlaufenden Seitenwange des Spannhebels eingeformt sein oder aber an einem parallel mit Abstand zu einer der beiden Seitenwangen des Basiselements verlaufenden Steg angeordnet und die Rastkante in einer benachbart zu dem Steg des Basiselements parallel verlaufenden Seitenwange des Spannhebels eingeformt sein.

Bei einem weiteren Ausführungsbeispiel des Gurtspanners weist die Verriegelungsvorrichtung eine an dem Spannhebel angeformte Rastnase auf, die in Geschlossenstellung des Gurtspanners an einer Rastkante des Basiselements beim Schließen des Gurtspanners einrastbar ist, wobei die Rastnase zum Entriegeln des Spannhebels über einen an dem Spannhebel angeformten Auslösehebel an der Rastkante ausklinkbar ist. Auch hier wird ein einfacher Gurtspanner aus maximal zwei Teilen zur Verfügung gestellt, und ein Entriegeln des Spannhebels in der Geschlossenstellung erfolgt sehr einfach und ohne erhöhten Kraftaufwand mittels des Auslösehebels.

Hierbei kann die Rastnase je nach Ausführungsform entweder an einer der beiden Seitenwangen des Spannhebels angeordnet und die Rastkante in einer benachbart zu der Seitenwange des Spannhebels parallel verlaufenden Seitenwange des Basiselements eingeformt sein oder aber die Rastkante kann an einem parallel mit Abstand zu einer der beiden Seitenwangen des Basiselements verlaufenden Steg angeordnet und die Rastnase in einer benachbart zu dem Steg des Basiselements parallel verlaufenden Seitenwange des Spannhebels eingeformt sein.

Als Rastkante kann beispielsweise ein Rand eines Durchbruches dienen.

In der Handhabungslasche des Spannhebels kann durch eine im Wesentlichen U-förmige Ausnehmung eine federnde Lasche gebildet sein, die den Auslösehebel für den Spannhebel bilden kann. Da der Auslösehebel mit seinem mit der Handhabungslasche verbundenen Ende nahe der Seitenwange des Spannhebels vorgesehen sowie in Verlängerung zu der Rastnase bzw. Rastkante angeordnet ist, kann der Auslösehebel direkt auf die Seitenwange und somit auf die Rastnase bzw. Rastkante wirken, wodurch ein einfaches Entriegeln des Spannhebels in der Geschlossenstellung möglich ist.

Die den Durchbruch bzw. die Rastnase aufweisende Seitenwange des Spannhebels kann im Bereich zwischen der an einem Ende der Seitenwange vorgesehenen Schwenkachse für den Spannhebel und des Durchbruchs bzw. der Rastnase eine Ausnehmung aufweisen, wobei zwischen der Ausnehmung und dem vorderen Ende des Spannhebels ein Steg gebildet sein kann, der einen Teilabschnitt der Seitenwange bilden kann. Die Ausnehmung sorgt dafür, dass sich der relativ kurze Steg, in dem sich die Rastnase bzw. der Durchbruch befindet, leichter durch den Auslösehebel bewegen lässt.

Je nach Ausführungsform können entweder die Seitenwangen des Spannhebels die Seitenwangen des Basiselements übergreifen oder aber die Seitenwangen des Basiselements die Seitenwangen des Spannhebels übergreifen. Durch ein Übergreifen der Seitenwangen des Spannhebels über die Seitenwangen des Basiselements ist die Stabilität des auf den Seitenwangen des Basiselements aufliegenden Spannhebels insbesondere bei Betätigung des Auslösehebels erhöht.

Ebenfalls je nach Ausführungsform kann entweder die Rastnase in der Seitenwange des Basiselements bzw. in dem Steg des Basiselements oder aber die Rastnase in der Seitenwange des Spannhebels bzw. in dem Steg des Spannhebels durch eine Eindrückung gebildet sein.

Die Eindrückung in dem Steg des Basiselements bzw. des Spannhebels kann entweder durch einen L-förmigen Schlitz oder aber durch einen U-förmigen Schlitz gebildet sein. Alternativ kann die Eindrückung auch durch eine in den Steg eingebrachte Einbuchtung bzw. Einwölbung gebildet sein.

Die Schwenkachse des Gurtspanners an dem einen Ende des Spannhebels kann durch an die Innenseiten bzw. an die Außenseiten der Seitenwangen des Spannhebels angeformte zylinderrohrförmige Ansätze gebildet sein, die in entsprechende Bohrungen in den Seitenwangen des Basiselements eingesetzt und umgebördelt sein können. Diese Ausbildung sorgt zum einen für eine gute Lagerung sowie einen festen Halt des Spannhebels an dem Basiselement.

Die erfindungsgemäße zweiteilige Ausgestaltung des Gurtspanners ermöglicht eine automatisierte Herstellung, da Basiselement und Spannhebel als Blechbiegestanzteile herstellbar sind, wobei die Schwenkachse durch eine integrierte rohrförmige Ausstellung eines Teils gebildet wird, die durch eine Öffnung des anderen Teils eingreift und nachfolgend umgebördelt wird.

Nachfolgend werden anhand der Zeichnung zwei Ausführungsbeispiele des erfindungsgemäßen Gurtspanners näher erläutert.

Es zeigen:
- Figur 1: eine perspektivische Ansicht eines ersten Ausführungsbeispiels eines Gurtspanners in Geschlossenstellung des Spannhebels,
- Figur 2: eine weitere perspektivische Ansicht des Gurtspanners nach Fig. 1, wobei die Ansicht ins Innere des Gurtspanners gerichtet ist,
- Figur 3: eine perspektivische Ansicht des Gurtspanners nach Fig. 1 und Fig. 2 mit dem Spannhebel in leicht geöffneter Stellung,
- Figur 4: eine perspektivische Ansicht eines zweiten Ausführungsbeispiels eines Gurtspanners in Geschlossenstellung des Spannhebels,
- Figur 5: eine weitere perspektivische Ansicht des Gurtspanners nach Fig. 4, wobei die Ansicht ins Innere des Gurtspanners gerichtet ist, und
- Figur 6: eine perspektivische Ansicht des Gurtspanners nach Fig. 4 und Fig. 5 mit dem Spannhebel in leicht geöffneter Stellung.

Der erfindungsgemäße Gurtspanner 1 ist zum Spannen eines Gurtes vorgesehen, der an einer Plane eines Lastkraftwagens, Anhängers, Aufliegers für Sattelzugmaschinen, Eisenbahnwaggons o.dgl. angreift, wobei mit einer Vielzahl von Gurten und Gurtspannern 1 das untere Ende der Plane an einem Bodenelement o.dgl. beispielsweise des Lastkraftwagens festspannbar ist.

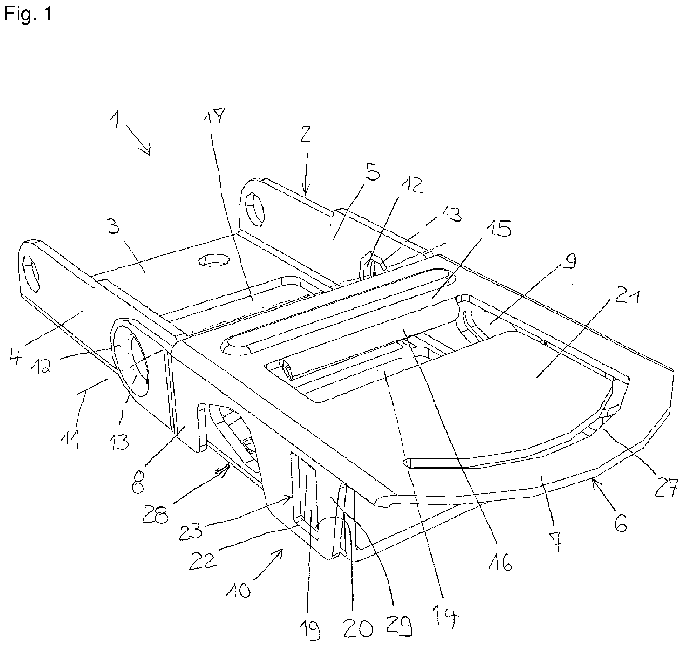

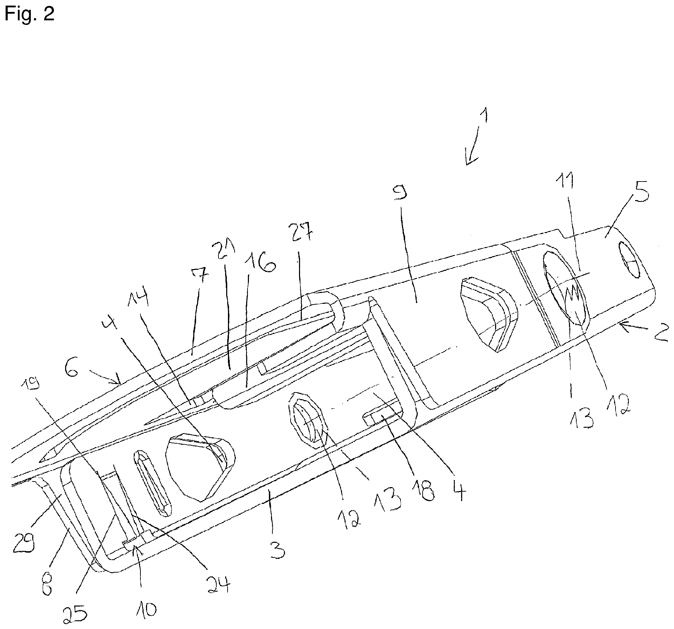

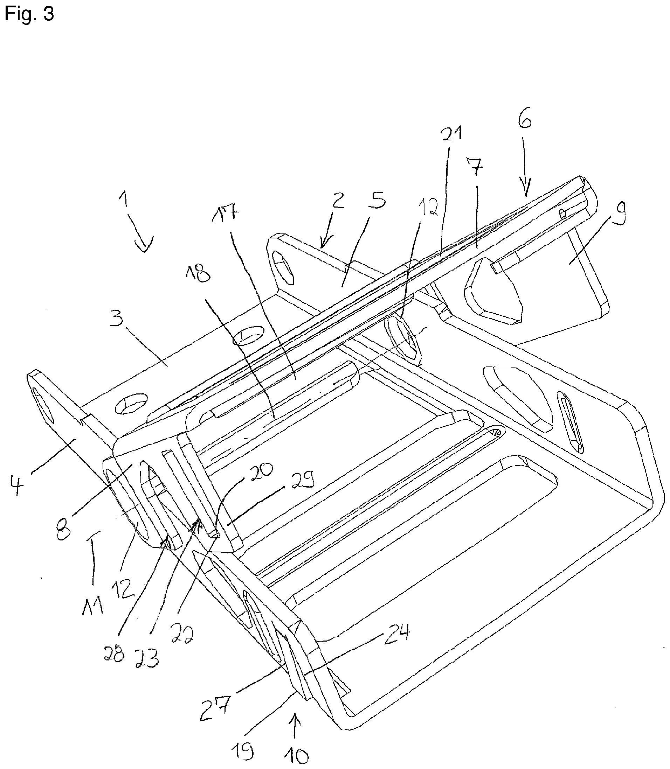

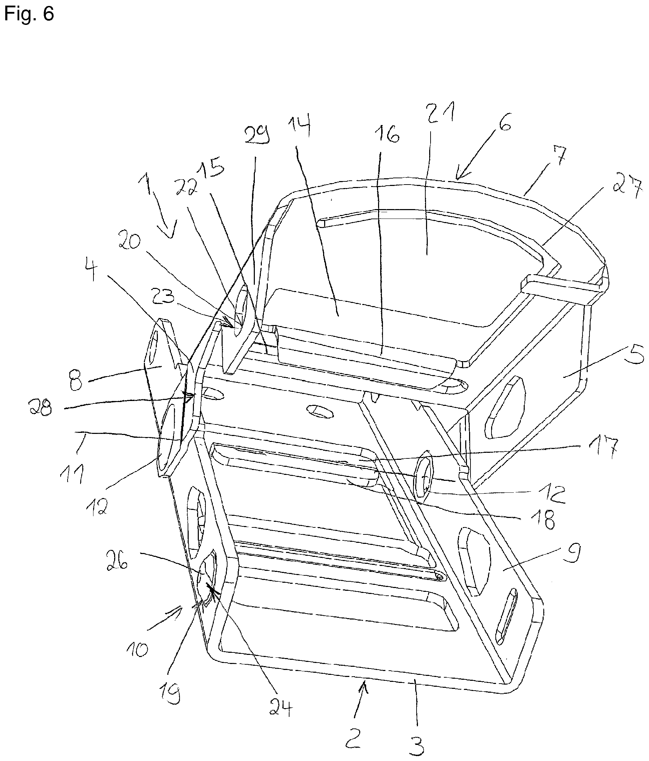

Dabei umfasst der Gurtspanner im Wesentlichen ein U-förmig ausgebildetes Basiselement 2, das aus einem Boden 3 sowie zwei Seitenwangen 4, 5 gebildet wird, sowie einen an den Seitenwangen 4, 5 des Basiselements 2 aus einer Offenstellung in eine Geschlossenstellung des Gurtspanners 1 schwenkbar gelagerten, U-förmig ausgebildeten Spannhebel 6 mit einer Handhabungslasche 7 und ebenfalls zwei Seitenwangen 8, 9. Bei den dargestellten Ausführungsformen des Gurtspanners 1 nach Fig. 1 bis Fig. 6 übergreifen die Seitenwangen 8, 9 des Spannhebels 6 die Seitenwangen 4, 5 des Basiselements 2. Alternativ dazu können aber auch bei einer weiteren nicht dargestellten Ausführungsform die Seitenwangen 4, 5 des Basiselements 2 die Seitenwangen 8, 9 des Spannhebels 6 übergreifen, so dass die durch die Seitenwangen 4, 5 des Basiselements 2 gebildeten Außenkanten im Wesentlichen durchlaufende Kanten bilden. Bevorzugt sind das Basiselement und der Spannhebel jeweils als einteiliges Blechbiegestanzteil hergestellt.

Des Weiteren weist der Gurtspanner 1 eine den Spannhebel 6 in der Geschlossenstellung mit dem Basiselement 2 verriegelbaren Verriegelungsvorrichtung 10 auf, auf die später noch genauer eingegangen wird.

Die Schwenkachse 11 des Gurtspanners 1 ist durch an dem einen Ende des Spannhebels 6 an die Seitenwangen 8, 9 desselben angeformte zylinderrohrförmige Ansätze 12 gebildet, die in entsprechende Bohrungen 13 in den Seitenwangen 4, 5 des Basiselementes 2 eingesetzt und derart umgebördelt sind, dass sich die Ansätze 12 in den Bohrungen 13 relativ spielfrei drehen lassen.

Die Handhabungslasche 7 des Spannhebels 6 weist eine als Gurtdurchführung dienende Öffnung 14 auf, wobei der zu der Schwenkachse 11 gerichtete Teil der Handhabungslasche 7 einen Haltesteg 15 für den Gurt bildet, dessen von der Schwenkachse 11 abgewandte Kante 16 zur Gurtumlenkung in Richtung der Schwenkachse 11 umgekantet ist. In dem Boden 3 des Basiselements 2 ist ebenfalls eine als Gurtdurchführung dienende Öffnung 17 auf der von der Schwenkachse 11 des Spannhebels 6 abgewandten Seite vorgesehen, wobei die zu der Schwenkachse 11 gerichtete Kante 18 zur Gurtumlenkung in Richtung der Schwenkachse 11 umgekantet ist.

Die Verriegelungsvorrichtung 10 weist bei den dargestellten Ausführungsformen des Gurtspanners 1 nach Fig. 1 bis Fig. 6 eine an einer der beiden Seitenwangen 4, 5 des Basiselements 2 angeformte Rastnase 19 auf, an der in Geschlossenstellung des Gurtspanners 1 eine in einer benachbart zu der Seitenwange 4 des Basiselements 2 parallel verlaufenden Seitenwange 8 eingeformte Rastkante 20 des Spannhebels 6 beim Schließen desselben einrastet. Zum Entriegeln des Spannhebels 6 ist die Rastkante 20 über einen an dem Spannhebel 6 angeformten Auslösehebel 21 an der Rastnase 19 ausklinkbar, wobei der Auslösehebel 21 durch Drücken desselben die Rastkante 20 von der Rastnase 19 wegschwenkt.

Bei einer weiteren nicht dargestellten Ausführungsform des Gurtspanners 1, bei der die Seitenwangen 4, 5 des Basiselements 2 die Seitenwangen 8, 9 des Spannhebels 6 übergreifen, ist die Rastnase 19 an einem parallel mit Abstand zu einer der beiden Seitenwangen 4, 5 des Basiselements 2 verlaufenden und von der Seitenwange 4 des Basiselements zurückstehenden, an den Boden 3 des Basiselements 2 angeformten und zu dem Spannhebel 6 gerichteten Steg angeordnet. Dabei erstreckt sich die Seitenwange 4 des Spannhebels 6 in Geschlossenstellung des Gurtspanners 1 zwischen der Seitenwange 4 und dem Steg.

Alternativ kann aber auch die Verriegelungsvorrichtung 10 bei einer weiteren, nicht dargestellten Ausführungsform die Rastnase 19 an dem Spannhebel 6 aufweisen und die Rastkante 20 an dem Basiselement vorgesehen sein, wobei die Rastnase 19 an der Rastkante 20 einrastet. Zum Entriegeln des Spannhebels 6 ist die Rastnase 19 über den an dem Spannhebel 6 angeformten Auslösehebel 21 an der Rastkante 20 ausklinkbar, wobei der Auslösehebel 21 durch Drücken desselben die Rastnase 19 von der Rastkante 20 wegschwenkt.

Dabei kann die Rastnase 19 an einer der beiden Seitenwangen 8, 9 des Spannhebels 6 angeordnet und die Rastkante 20 in der benachbart zu der Seitenwange 8 des Spannhebels 6 parallel verlaufenden Seitenwange 4 des Basiselements 2 eingeformt sein oder alternativ bei einer Ausführungsform, bei der die Seitenwangen 4, 5 des Basiselements 2 die Seitenwangen 8, 9 des Spannhebels 6 übergreifen, die Rastkante 20 an einem parallel mit Abstand zu einer der beiden Seitenwangen 4, 5 des Basiselements 2 verlaufenden und von der Seitenwange 4 des Basiselements 2 zurückstehenden, an den Boden 3 des Basiselements 2 angeformten und zu dem Spannhebel 6 gerichteten Steg angeordnet und die Rastnase 19 in der benachbart zu dem Steg des Basiselements 2 parallel verlaufenden Seitenwange 4 des Spannhebels 6 eingeformt sein. Auch hierbei erstreckt sich die Seitenwange 4 des Spannhebels 6 in Geschlossenstellung des Gurtspanners 1 zwischen der Seitenwange 4 und dem Steg.

Je nach Ausführungsform und Anordnung der Rastnase 19 bzw. der Rastkante 20 kann ein Entriegeln und Wegschwenken der Rastnase 19 oder der Rastkante 20 auch durch Ziehen des Auslösehebels 21 erfolgen.

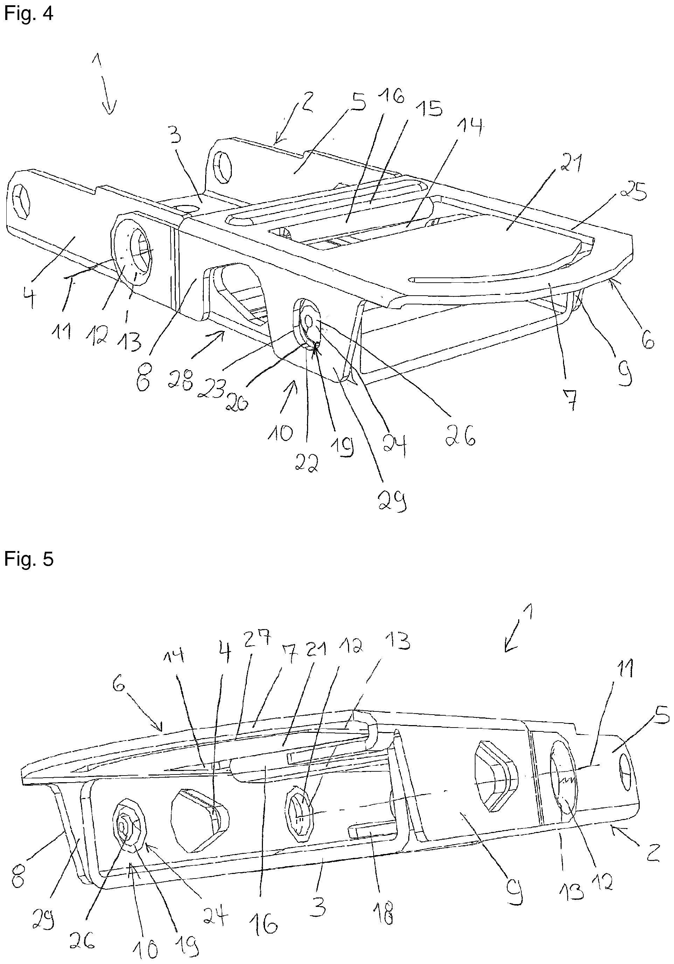

Die Rastkante 20 kann bei den beschriebenen Ausführungsformen durch einen Rand 22 eines Durchbruches 23 gebildet sein, wobei die Rastnase 19 durch eine Eindrückung 24 gebildet sein kann, die wiederum entweder durch einen U-förmigen Schlitz 25 (Fig. 1 bis Fig. 3) oder einen L-förmigen Schlitz (nicht dargestellt) oder eine Einformung 26 (Fig. 4 bis Fig. 6) gebildet ist.

Zur Bildung des Auslösehebels 21 für den Spannhebel 6 ist in der Handhabungslasche 7 eine U-förmige Ausnehmung 27 vorgesehen, durch die eine federnde Lasche gebildet ist. Die freien Enden der seitlichen Schenkel der U-förmigen Ausnehmung 27 sind dabei zu der Rastnase 19 und der Rastkante 20 bzw. zu der einen Seitenwange 8 des Spannhebels 6 gerichtet, wobei der eine Schenkel der U-förmigen Ausnehmung 27 durch die als Gurtdurchführung dienende Öffnung 14 gebildet sein kann.

Um den Kraftaufwand für die Betätigung des Auslösehebels gering zu halten, kann die den Durchbruch 23 bzw. die Rastnase 19 aufweisende Seitenwange 8 des Spannhebels 6 im Bereich zwischen der an einem Ende der Seitenwange 8 vorgesehenen Schwenkachse 11 für den Spannhebel 6 und des Durchbruchs 23 bzw. der Rastnase 19 eine Ausnehmung 28 aufweisen. Dadurch wird zwischen der Ausnehmung 28 und dem vorderen Ende des Spannhebels 6 ein Steg 29 gebildet, der einen Teilabschnitt der Seitenwange 8 des Spannhebels 6 mit einer geringeren Anbindungslänge an den Spannhebel 6 bildet.

## Patentansprüche

1. Gurtspanner (1) ausgebildet aus einem U-förmig ausgebildeten Basiselement (2) mit einem Boden (3) und zwei Seitenwangen (4, 5), und einem an den Seitenwangen (4, 5) des Basiselements (2) aus einer Offenstellung in eine Geschlossenstellung des Gurtspanners (1) schwenkbar gelagerten, U-förmig ausgebildeten Spannhebel (6) mit einer Handhabungslasche (7) und zwei Seitenwangen (8, 9) sowie einer den Spannhebel (6) in der Geschlossenstellung mit dem Basiselement (2) verriegelbaren Verriegelungsvorrichtung (10), **dadurch gekennzeichnet, dass** die Verriegelungsvorrichtung (10) entweder eine an dem Basiselement (2) angeformte Rastnase (19) aufweist, an der in Geschlossenstellung des Gurtspanners (1) eine Rastkante (20) des Spannhebels (6) beim Schließen desselben einrastbar ist, wobei die Rastkante (20) zum Entriegeln des Spannhebels (6) über einen an dem Spannhebel (6) angeformten Auslösehebel (21) an der Rastnase (19) ausklinkbar ist, oder eine an dem Spannhebel (6) angeformte Rastnase (19) aufweist, die in Geschlossenstellung des Gurtspanners (1) an einer Rastkante (20) des Basiselements (2) beim Schließen des Gurtspanners (1) einrastbar ist, wobei die Rastnase (19) zum Entriegeln des Spannhebels (6) über einen an dem Spannhebel (6) angeformten Auslösehebel (21) an der Rastkante (20) ausklinkbar ist, wobei der Auslösehebel (21) in beiden Fällen durch eine federnde Lasche gebildet ist, die durch eine in der Handhabungslasche (7) des Spannhebels (6) eingebrachte im Wesentlichen U-förmige Ausnehmung (27) gebildet ist.

2. Gurtspanner nach Anspruch 1, **dadurch gekennzeichnet, dass** die den Auslösehebel (21) ausbildende federnde Lasche ausschließlich an ihrer der Rastnase (19) bzw. der Rastkante (20) zugewandten Seite an der Handhabungslasche (7) des Spannhebels (6) angeformt ist.

3. Gurtspanner nach Anspruch 1 oder 2, **dadurch gekennzeichnet, dass** die Rastnase (19) entweder an einer der beiden Seitenwangen (4, 5) des Basiselements (2) angeordnet und die Rastkante (20) in einer benachbart zu der Seitenwange (4) des Basiselements (2) parallel verlaufenden Seitenwange (8) des Spannhebels (6) eingeformt ist, oder an einer der beiden Seitenwangen (8, 9) des Spannhebels (6) angeordnet und die Rastkante (20) in einer benachbart zu der Seitenwange (8) des Spannhebels (6) parallel verlaufenden Seitenwange (4) des Basiselements (2) eingeformt ist.

4. Gurtspanner nach Anspruch 1 oder 2, **dadurch gekennzeichnet, dass** entweder die Rastnase (19) an einem parallel mit Abstand zu einer der beiden Seitenwangen (4, 5) des Basiselements (2) verlaufenden Steg angeordnet und die Rastkante (20) in einer benachbart zu dem Steg des Basiselements (2) parallel verlaufenden Seitenwange (8) des Spannhebels (6) eingeformt ist, oder die Rastkante (20) an einem parallel mit Abstand zu einer der beiden Seitenwangen (8, 9) des Basiselements (2) verlaufenden Steg angeordnet und die Rastnase (19) in einer benachbart zu dem Steg des Basiselements (2) parallel verlaufenden Seitenwange (4) des Spannhebels (6) eingeformt ist.

5. Gurtspanner nach einem der Ansprüche 1 bis 4, **dadurch gekennzeichnet, dass** die Rastkante (20) durch einen Rand (22) eines Durchbruches (23) gebildet ist.

6. Gurtspanner nach einem der Ansprüche 1 bis 5, **dadurch gekennzeichnet, dass** die den Durchbruch (23) bzw. die Rastnase (19) aufweisende Seitenwange (8) des Spannhebels (6) im Bereich zwischen der an einem Ende der Seitenwange (8) vorgesehenen Schwenkachse (11) für den Spannhebel (6) und dem Durchbruch (23) bzw. der Rastnase (19) eine Ausnehmung (28) aufweist, wobei zwischen der Ausnehmung (28) und dem vorderen Ende des Spannhebels (6) ein Steg (29) gebildet ist, der einen Teilabschnitt der Seitenwange (8) bildet.

7. Gurtspanner nach einem der Ansprüche 1 bis 6, **dadurch gekennzeichnet, dass** die Seitenwangen (8, 9) des Spannhebels (6) die Seitenwangen (4, 5) des Basiselements (2) übergreifen.

8. Gurtspanner nach einem der Ansprüche 1 bis 6, **dadurch gekennzeichnet, dass** die Seitenwangen (4, 5) des Basiselements (2) die Seitenwangen (8, 9) des Spannhebels (6) übergreifen.

9. Gurtspanner nach einem der Ansprüche 1 bis 8, **dadurch gekennzeichnet, dass** die Rastnase (19) in der Seitenwange (4) des Basiselements (2) bzw. in dem Steg (29) des Basiselements (2) durch eine Eindrückung gebildet ist.

10. Gurtspanner nach einem der Ansprüche 1 bis 8, **dadurch gekennzeichnet, dass** die Rastnase (19) in der Seitenwange (8) des Spannhebels (6) bzw. in dem Steg des Spannhebels (6) durch eine Eindrückung (24) gebildet ist.

11. Gurtspanner nach Anspruch 9 oder 10, **dadurch gekennzeichnet, dass** die Eindrückung (24) in dem Steg (29) des Basiselements (2) bzw. des Spannhebels (6) durch einen L-förmigen Schlitz gebildet ist.

12. Gurtspanner nach Anspruch 9 oder 10, **dadurch gekennzeichnet, dass** die Eindrückung (24) in dem Steg (29) des Basiselements (2) bzw. des Spannhebels (6) durch einen U-förmigen Schlitz (25) gebildet ist.

13. Gurtspanner nach einem der Ansprüche 1 bis 11, **dadurch gekennzeichnet, dass** die Schwenkachse (11) des Gurtspanners (1) an dem einen Ende des Spannhebels (6) durch an die Innenseiten bzw. an die Außenseiten der Seitenwangen (8, 9) des Spannhebels (6) angeformte zylinderrohrförmige Ansätze (12) gebildet ist, die in entsprechende Bohrungen (13) in den Seitenwangen (4, 5) des Basiselements (2) eingesetzt und umgebördelt sind.

14. Gurtspanner nach einem der vorgenannten Ansprüche, **dadurch gekennzeichnet, dass** das Basiselement (2) und/oder der Spannhebel (6) als einteiliges Blechbiegestanzteil hergestellt sind.

15. Gurtspanner nach einem der vorgenannten Ansprüche, **dadurch gekennzeichnet, dass** dieser zweiteilig aus den jeweils als einteiliges Blechbiegestanzteil hergestellten, schwenkbar miteinander verbundenen Bauteilen Basiselement (2) und Spannhebel (6) ausgebildet ist.

## Claims

1. Belt tensioner (1) formed from a U-shaped base element (2) with a bottom (3) and two side walls (4, 5) and a U-shaped tension lever (6) mounted on the side walls (4, 5) of the base element (2) to be pivotable from an open position to a closed position of the belt tensioner (1) with a handling tab (7) and two side walls (8, 9) as well as a locking device (10), which can lock the tension lever (6) in the closed position to the base element (2), **characterised in that** the locking device (10) **either** has a latching lug (19) moulded on the base element (2), into which, in the closed position of the belt tensioner (1), a locking edge (20) of the tension lever (6) can be latched when it is closed, wherein the locking edge (20) for unlocking the tension lever (6) is disengageable at the latching lug (19) via a release lever (21) moulded on the tension lever (6), **or** has a latching lug (19) moulded on the tension lever (6), which, in the closed position of the belt tensioner (1), can be latched into a locking edge (20) of the base element (2) when the belt tensioner (1) is closed, wherein the latching lug (19) for unlocking the tension lever (6) is disengageable at the locking edge (20) via a release lever (21) moulded on the tension lever (6), wherein the release lever (21) is formed by a resilient tab in both cases, which is formed by a substantially U-shaped recess (27) inserted in the handling tab (7) of the tension lever (6).

2. Belt tensioner according to claim 1, **characterised in that** the resilient tab forming the release lever (21) is moulded on the handling tab (7) of the tension lever (6) exclusively on its side facing the latching lug (19) or the locking edge (20).

3. Belt tensioner according to claim 1 or 2, **characterised in that** the latching lug (19) is **either** arranged on one of the two side walls (4, 5) of the base element (2) and the locking edge (20) is formed in a side wall (8) of the tension lever (6) running parallel adjacent to the side wall (4) of the base element (2) or is arranged on one of the two side walls (8, 9) of the tension lever (6) and the locking edge (20) is formed in a side wall (4) of the base element (2) running parallel adjacent to the side wall (8) of the tension lever (6).

4. Belt tensioner according to claim 1 or 2, **characterised in that either** the latching lug (19) is arranged on a web running parallel to and at a distance from one of the two side walls (4, 5) of the base element (2) and the edge (20) is formed in a side wall (8) of the tension lever (6) running parallel adjacent to the web of the base element (2) **or** the locking edge (20) is arranged on a web running parallel to and at a distance from one of the two side walls (8, 9) of the base element (2) and the latching lug (19) is formed in a side wall (4) of the tension lever (6) running parallel adjacent to the web of the base element (2).

5. Belt tensioner according to one of claims 1 to 4, **characterised in that** the locking edge (20) is formed by an edge (22) of an opening (23).

6. Belt tensioner according to one of claims 1 to 5, **characterised in that** the side wall (8) of the tension lever (6) having the opening (23) or the latching lug (19) has a recess (28) in the area between the pivot axis (11) for the tension lever (6) provided on one end of the side wall (8) and the opening (23) or the latching lug (19), wherein a web (29) is formed between the recess (28) and the front end of the tension lever (6), which forms a section of the side wall (8).

7. Belt tensioner according to one of claims 1 to 6, **characterised in that** the side walls (8, 9) of the tension lever (6) engage over the side walls (4, 5) of the base element (2).

8. Belt tensioner according to one of claims 1 to 6, **characterised in that** the side walls (4, 5) of the base element (2) engage over the side walls (8, 9) of the tension lever (6).

9. Belt tensioner according to one of claims 1 to 8, **characterised in that** the latching lug (19) is formed by an indentation in the side wall (4) of the base element (2) or in the web (29) of the base element (2).

10. Belt tensioner according to one of claims 1 to 8, **characterised in that** the latching lug (19) is formed by an indentation (24) in the side wall (8) of the tension lever (6) or in the web of the tension lever (6).

11. Belt tensioner according to claim 9 or 10, **characterised in that** the indentation (24) in the web (29) of the base element (2) or of the tension lever (6) is formed by an L-shaped slot.

12. Belt tensioner according to claim 9 or 10, **characterised in that** the indentation (24) in the web (29) of the base element (2) or of the tension lever (6) is formed by a U-shaped slot (25).

13. Belt tensioner according to one of claims 1 to 11, **characterised in that** the pivot axis (11) of the belt tensioner (1) on the one end of the tension lever (6) is formed by lugs (12) in the shape of a cylindrical tube moulded on the inner sides or on the outer sides of the side walls (8, 9) of the tension lever (6), which are inserted in corresponding bores (13) in the side walls (4, 5) of the base element (2) and beaded.

14. Belt tensioner according to one of the previous claims, **characterised in that** the base element (2) and/or the tension lever (6) are produced as a one-piece metal bent-punched part.

15. Belt tensioner according to one of the previous claims, **characterised in that** it is formed in two parts from the components base element (2) and tension lever (6), which are respectively produced as a one-piece metal bent-punched part and are pivotably connected to one another.

## Revendications

1. Tendeur (1) de sangle formé à partir d'un élément de base (2) formé en forme de U avec un fond (3) et deux parois latérales (4, 5), et à partir d'un levier tendeur (6) en forme de U formé contre les parois latérales (4, 5) de l'élément de base (2) et en appui permettant un pivotement d'une position ouverte vers une position fermée du tendeur (1) de sangle, avec une patte d'actionnement (7) et deux parois latérales (8, 9) ainsi qu'avec un dispositif de verrouillage (10) permettant en position fermée de verrouiller le levier tendeur (6) avec l'élément de base (2),
**caractérisé en ce que** le dispositif de verrouillage (10) présente **soit** une saillie de crantage (19) modelée contre l'élément de base (2) contre laquelle, lorsque le tendeur (1) de sangle se trouve en position fermée, une arête de crantage (20) du levier tendeur (6) peut encranter lors de la fermeture de ce dernier, sachant que l'arête de crantage (20), pour déverrouiller le levier tendeur (6), est détachable au niveau de la saillie de crantage (19) via un levier déclencheur (21) modelé contre le levier tendeur (6), **soit** une saillie de crantage (19) modelée contre le levier tendeur (6), saillie qui lorsque le tendeur (1) de sangle se trouve en position fermée peut encranter contre une arête de crantage (20) de l'élément de base (2) lors de la fermeture du tendeur (1) de sangle, sachant que pour déverrouiller le levier tendeur (6) la saillie de crantage (19) est détachable au niveau de l'arête de crantage (20) via un levier déclencheur (21) modelé contre le levier tendeur (6), sachant que le levier déclencheur (21) est formé dans les deux cas par une patte d'amorti formée par un évidement (27) essentiellement en forme de U ménagé dans la patte d'actionnement (7) du levier tendeur (6).

2. Tendeur de sangle selon la revendication 1, **caractérisé en ce que** la patte d'amorti formant le levier déclencheur (21) est modelée, exclusivement sur son côté regardant la saillie de crantage (19) ou l'arête de crantage (20), contre la patte d'actionnement (7) du levier de crantage (6).

3. Tendeur de sangle selon la revendication 1 ou 2, **caractérisé en ce que** la saillie de crantage (19) **soit** est disposée contre l'une des deux parois latérales (4, 5) de l'élément de base (2) et que l'arête de crantage (20) est modelée dans une paroi latérale (8) - présentant un tracé parallèle à la paroi latérale (4) de l'élément de base (2) au voisinage de la paroi - du levier tendeur (6),
**soit** est disposée contre l'une des deux parois latérales (8, 9) du levier tendeur (6) et que l'arête de crantage (20) est modelée dans une paroi latérale (4) - présentant un tracé parallèle à la paroi latérale (8) du levier tendeur (6) au voisinage de la paroi - de l'élément de base (2).

4. Tendeur de sangle selon la revendication 1 ou 2, **caractérisé en ce que soit** la saillie de crantage (19) est disposée contre une nervure dont le tracé est parallèle et distant de l'une des deux parois latérales (4, 5) de l'élément de base (2) et que l'arête de crantage (20) est modelée dans une paroi latérale (8) - présentant un tracé parallèle à la nervure de l'élément de base (2) au voisinage de la nervure - du levier tendeur (6), **soit** l'arête de crantage (20) est disposée contre une nervure dont le tracé est parallèle et distant de l'une des deux parois latérales (8, 9) de l'élément de base (2), et que la saillie de crantage (19) est modelée dans une paroi latérale (4) - présentant un tracé parallèle à la nervure de l'élément de base (2) au voisinage de la nervure - du levier tendeur (6).

5. Tendeur de sangle selon l'une des revendications 1 à 4, **caractérisé en ce que** l'arête de crantage (20) est formée par un bord (22) d'une perforation (23).

6. Tendeur de sangle selon l'une des revendications 1 à 5, **caractérisé en ce que** la paroi latérale (8) - présentant la perforation (23) ou la saillie de crantage (19) - du levier tendeur (6) présente un évidement (28) dans la zone comprise entre l'axe de pivotement (11) du levier tendeur (6) prévu à une extrémité de la paroi latérale (8) et la perforation (23) ou la saillie de crantage (19) respectivement, sachant qu'entre l'évidement (28) et l'extrémité avant du levier tendeur (6) est formée une nervure (29) formant un segment partiel de la paroi latérale (8).

7. Tendeur de sangle selon l'une des revendications 1 à 6, **caractérisé en ce que** les parois latérales (8, 9) du levier tendeur (6) recouvrent les parois latérales (4, 5) de l'élément de base (2).

8. Tendeur de sangle selon l'une des revendications 1 à 6, **caractérisé en ce que** les parois latérales (4, 5) de l'élément de base (2) recouvrent les parois latérales (8, 9) du levier tendeur (6).

9. Tendeur de sangle selon l'une des revendications 1 à 8, **caractérisé en ce que** la saillie de crantage (19) dans la paroi latérale (4) de l'élément de base (2) ou dans la nervure (29) de l'élément de base (2) est formée par une empreinte.

10. Tendeur de sangle selon l'une des revendications 1 à 8, **caractérisé en ce que** la saillie crantage (19), dans la paroi latérale (8) du levier tendeur (6) ou dans la nervure du levier tendeur (6), est formée par une empreinte (24).

11. Tendeur de sangle selon la revendication 9 ou 10, **caractérisé en ce que** l'empreinte (24) dans la nervure (29) de l'élément de base (2) ou du levier tendeur (6) est formée par une fente en forme de L.

12. Tendeur de sangle selon la revendication 9 ou 10, **caractérisé en ce que** l'empreinte (24) dans la nervure (29) de l'élément de base (2) ou du levier tendeur (6) est formée par une fente (25) en forme de U.

13. Tendeur de sangle selon l'une des revendications 1 à 11, **caractérisé en ce que** l'axe de pivotement (11) du tendeur de sangle (1) est formé à une extrémité du levier tendeur (6) par des épaulements (12) en forme de tube cylindrique modelés contre les côtés intérieurs ou extérieurs des parois latérales (8, 9) du levier tendeur (6), épaulements qui sont introduits et sertis dans des alésages (13) correspondants dans les parois latérales (4, 5) de l'élément de base (2).

14. Tendeur de sangle selon l'une des revendications précédentes, **caractérisé en ce que** l'élément de base (2) et/ou le levier tendeur (6) sont fabriqués dans une pièce en tôle monobloc coudée et poinçonnée.

15. Tendeur de sangle selon l'une des revendications précédentes, **caractérisé en ce que** ce dernier est fabriqué en deux parties à partir des composants « élément de base » (2) et « levier tendeur » (6) reliés entre eux de manière pivotante et fabriqués respectivement sous forme de pièce en tôle monobloc coudée et poinçonnée.
